# EUROPEAN PATENT SPECIFICATION

(11) **EP 2 890 919 B1**
(45) Date of publication and mention of the grant of the patent: **04.01.2017**
(21) Application number: 13759645.8
(22) Date of filing: 28.08.2013
(51) Int. Cl.: F16K 27/04, F16K 47/08

(54) **VALVE BODY WITH IMPROVED LOWER FLOW CAVITY**
VENTILKÖRPER MIT VERBESSERTEM UNTEREM STRÖMUNGSHOHLRAUM
CORPS DE SOUPAPE ÉQUIPÉ D'UNE CAVITÉ D'ÉCOULEMENT INFÉRIEURE PERFECTIONNÉE

(30) Priority: 30.08.2012 US 201213598950
(43) Date of publication of application: 08.07.2015
(73) Proprietor: Fisher Controls International LLC, Marshalltown, IA 50158 (US)
(72) Inventor: HILSABECK, Jeremy, Robert, Marshalltown, IA 50158 (US); DAVIES, Lonnie, Oscar, Jr., Newton, IA 50208 (US); ENGLE, Chad, Michael, Marshalltown, IA 50158 (US); SKAAR, Anders, John, Eagan, MN 55123 (US); FORSMAN, Daniel, Howard, Rochester, MN 55906 (US)
(74) Representative: Petraz, Gilberto Luigi
(86) International application number: PCT/US2013/056960
(87) International publication number: WO 2014/042872

(56) References cited:
- EP-A1- 0 072 170
- DE-A1- 3 519 916
- DE-C- 195 158
- US-A- 3 648 718
- US-A- 4 384 592
- US-A1- 2009 179 163
- US-A1- 2010 326 533

## Description

### FIELD OF THE DISCLOSURE

The present disclosure is directed to a valve body and, more particularly, a globe style valve body.

### BACKGROUND

Globe style valve bodies typically have tortuous flow paths that result in many fluid inefficiencies. Moreover, globe style valve bodies tend to include a flow path that changes from having a circular cross-section at the inlet/outlet openings to having an elliptical cross-section at a location below the valve port. The elliptical portion of the flow path is generally much larger in dimension than the valve port diameter, which leads to an abrupt restriction in the flow path further reducing efficiency. This change in shape also introduced turbulence in the fluid flow, which can generate and/or increase, noise and vibrations. The negative effects on flow efficiency become exaggerated even further when the overall flange-to-flange length of any given globe style valve body is shortened because, ultimately, the flow path becomes compressed and more tortuous. A known globe valve is described for example in EP 0072170 A1.

### SUMMARY

The valve body of the invention is defined by the features of claim 1. One aspect of the present disclosure provides a valve body including a first opening, a second opening, a gallery, a first flow conduit portion and a second flow conduit portion. The first and second openings are centered on a central axis of the valve body. The gallery is disposed between the first and second openings for accommodating a trim assembly, and includes a cylindrical space positioned on a gallery axis that is perpendicular to the central axis. The first flow conduit portion extends between the first opening and a side opening of the gallery. The second flow conduit portion extends between the second opening and a bottom opening of the gallery. Moreover, the second flow conduit portion includes a lower cavity sub-portion disposed immediately below the bottom opening and a side cavity sub-portion disposed between the lower cavity sub-portion and the second opening. The lower cavity sub-portion includes an elbow conduit section and a straight cylindrical conduit section disposed between the elbow conduit section and the bottom opening of the gallery. The straight cylindrical conduit section extends away from the bottom opening of the gallery and has a conduit diameter that is equal to or less than a gallery diameter of the bottom opening of the gallery. The elbow conduit section extends away from the straight cylindrical conduit section along a curved axis to the side cavity sub-portion.

Another aspect of the disclosure provides a valve body including a first opening, a second opening, a gallery, a first flow conduit portion, a second flow conduit portion, a first flow axis, and a second flow axis. The first and second openings are centered on a central axis of the valve body. The gallery is disposed between the first and second openings for accommodating a trim assembly, and includes a cylindrical space positioned on a gallery axis that is perpendicular to the central axis. The first flow conduit portion extends between the first opening and a side opening of the gallery. The second flow conduit portion extends between the second opening and a bottom opening of the gallery. The first flow axis extends along a center of the first flow conduit portion between the first opening and the side opening of the gallery. The second flow axis extends along a center of the second flow conduit portion between the second opening and the bottom opening of the gallery. At least a portion of the second flow axis is aligned with the gallery axis at a location immediately adjacent the bottom opening of the gallery.

### BRIEF DESCRIPTION OF THE DRAWINGS

Fig. 1 is a cross-sectional side view of a globe style valve body constructed in accordance with the principles of the present disclosure.
Fig. 2 is a cross-section through line 2-2 of Fig. 1, as through Fig. 1 were a complete valve body, and showing an alternative version not belonging to the invention.

### DETAILED DESCRIPTION

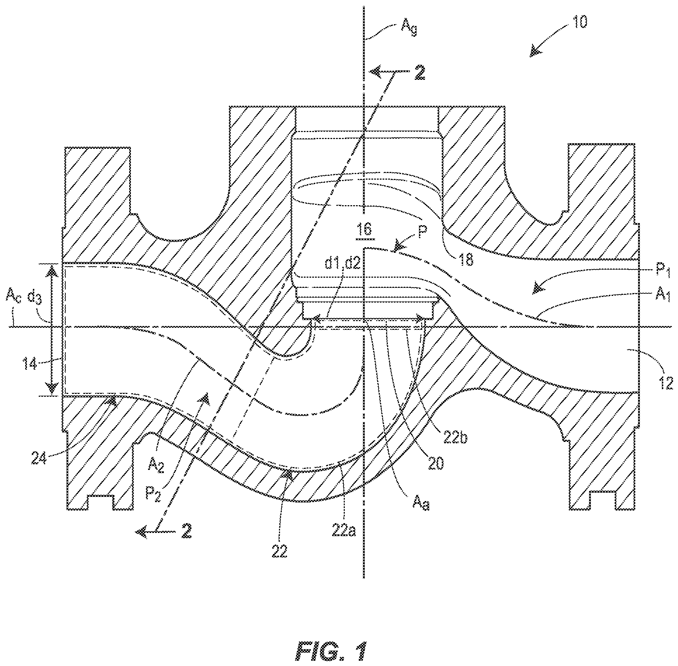

Fig. 1 depicts a cross-sectional side view of a globe style valve body 10 constructed in accordance with the principles of the present disclosure. The valve body 10 includes a first opening 12, a second opening 14, and a gallery 16 disposed between the first and second openings 12, 14. Each opening 12, 14 includes a circular opening centered on a central axis Ac of the valve body 10, which is horizontal. In the depicted version, the first and second openings 12, 14 are flanged openings for connecting in a pipeline, but other versions may offer openings adapted for weld ends or openings adapted for other types of connections. The gallery 16 is adapted to accommodate a trim assembly (not shown) such as a seat ring, a cage, etc. and a movable control element (not shown), in a known manner. The gallery 16 includes a generally cylindrical space positioned on a gallery axis Ag that is vertical and therefore perpendicular to the central axis Ac of the valve body 10.

The valve body 10 includes a first flow conduit portion P1 and a second flow conduit portion P2 defining a flow path P through the valve body 10. As depicted, the first flow conduit portion P1 includes a first flow axis A1 extending along a center thereof between the first opening 12 and a side opening 18 of the gallery 16. The second flow conduit portion P2 includes a second flow axis A2 extending along a center thereof between the second opening 14 and a bottom opening 20 of the gallery 16.

As indicated with dashed lines in Fig. 1, the second flow conduit portion P2 can be described as including a lower cavity sub-portion 22 disposed immediately below the bottom opening 20 of the gallery 16 and a side cavity sub-portion 24 disposed between the lower cavity sub-portion 22 and the second opening 14. Furthermore, as also indicated with dashed lines, the lower cavity sub-portion 22 can be described as including an elbow conduit section 22a and a straight cylindrical conduit section 22b. The straight cylindrical conduit section 22b is disposed between the elbow conduit section 22a and the bottom opening 20 of the gallery 16 and is in fluid communication with and extends away from the bottom opening 20 of the gallery 16 along the gallery axis Ag. That is, the straight cylindrical conduit section 22b includes a central axis Aa that is aligned with the gallery axis Ag. The elbow conduit section 22a extends away from the straight cylindrical conduit section 22b along a curved portion of the second flow axis A2 toward the side cavity sub-portion 24 of the second flow conduit portion P2.

In the disclosed version of the valve body 10, the straight cylindrical conduit section 22b can include a diameter d1 and a longitudinal central dimension L. The diameter d1 of the straight cylindrical conduit section 22b can be constant and equal to or less than a diameter d2 of the bottom opening 20 of the gallery 16. Additionally, the diameter d1 of the straight cylindrical conduit section 22b is equal to a diameter d3 of the
second opening 14. Moreover, in the depicted version of the valve body 10, the longitudinal dimension L of the straight cylindrical conduit section 22b is less than its diameter d1 or, said another way, the diameter d1 of the straight cylindrical conduit section 22b is greater than its longitudinal dimension L. Other versions of course can be dimensioned differently.

In one version, the diameters d1, d2 of the straight cylindrical conduit section 22b and the bottom opening 20 of the gallery 16 can be approximately 6" (152.4 millimeters) and the diameter d3 of the second opening 14 can be approximately 7.5" (190 millimeters). This reduction in diameter can occur in the second flow conduit portion P2 generally gradually from the second opening 14 to the straight cylindrical conduit section 22b.

As mentioned, the first and second openings 12, 14 of the disclosed valve body 10 are circular openings and the straight cylindrical conduit section 22b is also circular in cross-section. According to the invention, the second flow conduit portion P2 includes a circular cross-section along its entire length, extending between the second opening 14 and the bottom opening 20 of the gallery 16. In another version of the disclosed valve body 10, not belonging to the invention, a portion of the elbow conduit section 22a of the second flow conduit portion P2 can have an oval cross-section. The term "oval," as used herein, means any non-circular shape that may be used including, for example, an egg shape, an ellipse, a racetrack shape, etc.

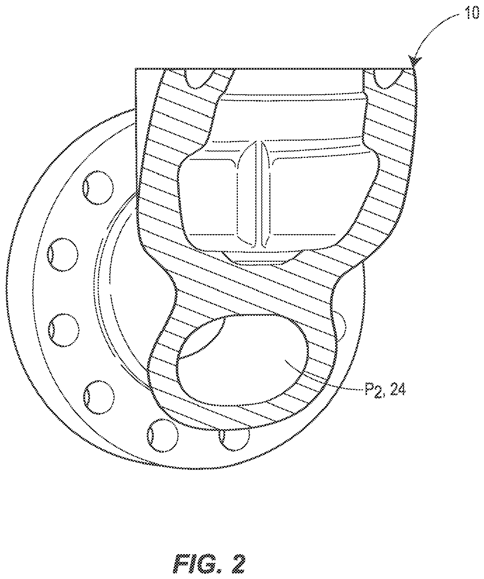

In one version of the valve body 10, not belonging to the invention, the second flow conduit portion P2 can include an oval cross-section in a region corresponding to where line 2-2 passes through the valve body 10 in Fig. 1. As shown in Fig. 2, the cross-section of the second flow conduit portion P2 in the region of line 2-2 in this alternative version can be only slightly oval, as might be required to satisfy certain manufacturing constraints, for example, without sacrificing fluid flow efficiency. While the cross-section through line 2-2 can include this slight oval, its cross-sectional area would remain generally constant relative to its immediately adjoining circular cross-sectional regions of the second flow conduit portion P2. Even in such a version where the second flow conduit portion P2 includes the above-described oval cross-sectional region, the remainder of the lower cavity sub-portion 22 and side cavity sub-portion 24 of the second flow conduit portion P2 include circular cross-sections throughout.

Depending on the desired operational configuration, the valve body 10 of the present disclosure can be arranged in a flow-up configuration such that the second opening 14 is the inlet of the valve body 10 and the first opening 12 is the outlet, or it can be arranged in a flow-down configuration such that the first opening 12 is the inlet and the second opening 14 is the outlet.

Based on the foregoing construction, the arrangement of the first flow conduit portion P1, second flow conduit portion P2, and gallery 16 cooperate to streamline and increase the efficiency of the fluid flow through the valve 10. For example, in a flow-up configuration, fluid flows into the valve body 10 at the second opening 14 and through the second flow conduit portion P2 along the second flow axis A2. As the fluid flows through the lower cavity sub-portion 22, it first flows through the elbow conduit section 22a and then through the straight cylindrical conduit section 22b, before arriving at the bottom opening 20 of the gallery 16.

Because the straight cylindrical conduit section 22b is straight and includes a constant diameter d1 that is equal to or less than a diameter d2 of the bottom opening 20, the fluid flows freely from the second flow conduit portion P2 into the gallery 16. Said another way, no aspect of the valve body 10 interferes with the fluid flowing between the second flow conduit portion P2 and the gallery 16. This free flow of fluid is further assisted by the fact that the second flow axis A2 is aligned with the gallery axis Ag throughout the straight cylindrical conduit section 22b. Said another way, and as mentioned above, the straight cylindrical conduit section 22b and the gallery 16 are co-axially aligned (i.e., they extend along and are centered on a common linear axis). Further still, another aspect of the disclosure that assists with the free flow of fluid through the valve body 10 is the fact that the entire elbow conduit section 22a of the lower cavity sub-portion 22 is circular in cross-section, which enables the fluid flowing therethrough to take a natural curving flow path into or out of the gallery 16.

From the foregoing, it can be seen that the present disclosure advantageously provides an improved valve body that effectively reduces and/or eliminates turbulence along the flow path at various locations, including at least a location below the gallery. This reduction and/or elimination of turbulence advantageously can reduce and/or eliminate noise and vibrations caused by such turbulent fluid flow.

While the foregoing disclosure provides various versions of a valve body of the present invention, the disclosure is not limited to the specifics disclosed. Rather, the disclosure is merely exemplary in nature. The invention is to be determined and defined by the scope of the following claims.

## Claims

1. A valve body (10) comprising:
a first opening (12) centered on a central axis (Ac) of the valve body (10);
a second opening (14) centered on the central axis (Ac);
a gallery (16) disposed between the first and second openings (12, 14) for accommodating a trim assembly, the gallery (16) comprising a cylindrical space positioned on a gallery axis (Ag) that is perpendicular to the central axis (Ac);
a first flow conduit portion (P1) extending between the first opening (12) and a side opening (18) of the gallery (16); and
a second flow conduit portion (P2) extending between the second opening (14) and a bottom opening (20) of the gallery (16), the second flow conduit portion (P2) including a lower cavity sub-portion (22) disposed immediately below the bottom opening (20) and a side cavity sub-portion (24) disposed between the lower cavity sub-portion (22) and the second opening (14),
the lower cavity sub-portion (22) including an elbow conduit section (22a) and a straight cylindrical conduit section (22b) disposed between the elbow conduit section (22a) and the bottom opening (20) of the gallery (16), the straight cylindrical conduit section (22b) extending away from the bottom opening (20) of the gallery (16) to the elbow conduit section (22a) and having a circular cross-section with a conduit diameter (d1) that is constant and equal to or less than a gallery diameter (d2) of the bottom opening (20) of the gallery (16), the elbow conduit section (22a) extending away from the straight cylindrical conduit section (22b) along a curved axis to the side cavity sub-portion (24) and including a circular cross-section along its entirety,
**characterized in that**
the second flow conduit portion (P2) has a circular cross-section along its entire length, the conduit diameter (d1) of the straight cylindrical conduit section (22b) is less than a diameter (d3) of the second opening (14), and a diameter of the cross-section of the second flow conduit portion (P2) gradually decreases from the diameter (d3) at the second opening (14) to the conduit diameter (d1) at the straight cylindrical conduit section (22b).

2. The valve body of claim 1, wherein the straight cylindrical conduit section (22b) of the lower cavity sub-portion (22) is centered on the gallery axis (Ag).

3. The valve body of any of the preceding claims, wherein the first opening (12) is an inlet of the valve body and the second opening (14) is an outlet of the valve body.

4. The valve body of any of claims 1 and 2, wherein the second opening (14) is an inlet of the valve body and the first opening (12) is an outlet of the valve body.

5. The valve body of any of the preceding claims, wherein the straight cylindrical conduit section (22b) has a longitudinal dimension that is less than the conduit diameter (d1).

6. The valve body (10) of any of the preceding claims and comprising:
a first flow axis (A1) extending along a center of the first flow conduit portion (P1) between the first opening (12) and the side opening (18) of the gallery (16); and
a second flow axis (A2) extending along a center of the second flow conduit portion (P2) between the second opening (14) and the bottom opening (20) of the gallery (16), at least a portion of the second flow axis (A2) being aligned with the gallery axis (Ag) at a location immediately adjacent the bottom opening (20) of the gallery (16);
wherein the straight cylindrical conduit section (22b) is disposed immediately adjacent to the bottom opening (20) of the gallery (16) and centered along the second flow axis (A2) and the gallery axis (Ag).

## Patentansprüche

1. Ventilkörper (10), umfassend:
eine erste Öffnung (12), die auf einer Mittelachse (Ac) des Ventilkörpers (10) zentriert ist;
eine zweite Öffnung (14), die auf der Mittelachse (Ac) zentriert ist;
einen Gang (16), der zwischen der ersten Öffnung (12) und der zweiten Öffnung (14) angeordnet ist, um eine Randbaugruppe aufzunehmen, wobei der Gang (16) einen zylindrischen Raum umfasst, der auf einer Gangachse (Ag), welche senkrecht zu der Mittelachse (Ac) verläuft, angeordnet ist;
einen ersten Durchflussleitungsabschnitt (P1), der sich zwischen der ersten Öffnung (12) und einer Seitenöffnung (18) des Ganges (16) erstreckt; und
einen zweiten Durchflussleitungsabschnitt (P2), der sich zwischen der zweiten Öffnung (14) und einer unteren Öffnung (20) des Ganges (16) erstreckt, wobei der zweite Durchflussleitungsabschnitt (P2) einen unteren Hohlraum-Unterabschnitt (22), der unmittelbar unterhalb der unteren Öffnung (20) angeordnet ist, und einen seitlichen Hohlraum-Unterabschnitt (24), der zwischen dem unteren Hohlraum-Unterabschnitt (22) und der zweiten Öffnung (14) angeordnet ist, umfasst,
wobei der untere Hohlraum-Unterabschnitt (22) einen Knie-Leitungsabschnitt (22a) und einen geraden zylindrischen Leitungsabschnitt (22b), der zwischen dem Knie-Leitungsabschnitt (22a) und der unteren Öffnung (20) des Ganges (16) angeordnet ist, umfasst, wobei sich der gerade zylindrische Leitungsabschnitt (22b) von der unteren Öffnung (20) des Ganges (16) weg zu dem Knie-Leitungsabschnitt (22a) erstreckt und einen kreisförmigen Querschnitt mit einem Leitungsdurchmesser (d1) aufweist, der gleichbleibend und gleich dem oder kleiner als ein Gangdurchmesser (d2) der unteren Öffnung (20) des Ganges (16) ist, wobei sich der Knie-Leitungsabschnitt (22a) von dem geraden zylindrischen Leitungsabschnitt (22b) weg entlang einer gebogenen Achse zu dem seitlichen Hohlraum-Unterabschnitt (24) erstreckt und entlang seiner Gesamtheit einen kreisförmigen Querschnitt umfasst,
**dadurch gekennzeichnet, dass**
der zweite Durchflussleitungsabschnitt (P2) einen kreisförmigen Querschnitt entlang seiner gesamten Länge aufweist, der Leitungsdurchmesser (d1) des geraden zylindrischen Leitungsabschnitts (22b) kleiner ist als ein Durchmesser (d3) der zweiten Öffnung (14), und ein Durchmesser des Querschnitts des zweiten Durchflussleitungsabschnitts (P2) graduell von dem Durchmesser (d3) an der zweiten Öffnung (14) zu dem Leitungsdurchmesser (d1) an dem geraden zylindrischen Leitungsabschnitt (22b) abnimmt.

2. Ventilkörper gemäß Anspruch 1, wobei der gerade zylindrische Leitungsabschnitt (22b) des unteren Hohlraum-Unterabschnitts (22) auf der Gangachse (Ag) zentriert ist.

3. Ventilkörper gemäß irgendeinem der vorhergehenden Ansprüche, wobei die erste Öffnung (12) ein Eingang des Ventilkörpers ist, und die zweite Öffnung (14) ein Auslass des Ventilkörpers ist.

4. Ventilkörper gemäß irgendeinem der Ansprüche 1 und 2, wobei die zweite Öffnung (14) ein Eingang des Ventilkörpers ist, und die erste Öffnung (12) ein Auslass des Ventilkörpers ist.

5. Ventilkörper gemäß irgendeinem der vorhergehenden Ansprüche, wobei der gerade zylindrische Leitungsabschnitt (22b) eine längsverlaufende Abmessung hat, die kleiner ist als der Leitungsdurchmesser (d1).

6. Ventilkörper (10) gemäß irgendeinem der vorhergehenden Ansprüche und umfassend:
eine erste Durchflussachse (A1), die sich entlang einer Mitte des ersten Durchflussleitungsabschnitts (P1) zwischen der ersten Öffnung (12) und der seitlichen Öffnung (18) des Ganges (16) erstreckt, und
eine zweite Durchflussachse (A2), die sich entlang einer Mitte des zweiten Durchflussleitungsabschnitts (P2) zwischen der zweiten Öffnung (14) und der unteren Öffnung (20) des Ganges (16) erstreckt, wobei zumindest ein Teil der zweiten Durchflussachse (A2) mit der Gangachse (Ag) an einer Stelle unmittelbar angrenzend an die untere Öffnung (20) des Ganges (16) ausgerichtet ist,
wobei der gerade zylindrische Leitungsabschnitt (22b) unmittelbar angrenzend an die untere Öffnung (20) des Ganges (16) angeordnet und entlang der zweiten Durchflussachse (A2) und der Gangachse (Ag) zentriert ist.

## Revendications

1. Corps de soupape (10) comprenant :
une première ouverture (12) centrée sur un axe central (Ac) du corps de soupape (10) ;
une seconde ouverture (14) centrée sur l'axe central (Ac) ;
une galerie (16) disposée entre les première et seconde ouvertures (12, 14) pour loger un assemblage de robinet, la galerie (16) comprenant un espace cylindrique positionné sur un axe de galerie (Ag) qui est perpendiculaire à l'axe central (Ac) ;
une première partie de conduit de circulation (P1) s'étendant entre la première ouverture (12) et une ouverture latérale (18) de la galerie (16) ; et
une seconde partie de conduit de circulation (P2) s'étendant entre la seconde ouverture (14) et une ouverture inférieure (20) de la galerie (16), la seconde partie de conduit de circulation (P2) incluant une sous-partie de cavité inférieure (22) disposée immédiatement sous l'ouverture inférieure (20) et une sous-partie de cavité latérale (24) disposée sous la sous-partie de cavité inférieure (22) et la seconde ouverture (14),
la sous-partie de cavité inférieure (22) incluant une section de conduit coudée (22a) et une section de conduit cylindrique droite (22b) disposée sous la section de conduit coudée (22a) et l'ouverture inférieure (20) de la galerie (16), la section de conduit cylindrique droite (22b) s'étendant de l'ouverture inférieure (20) de la galerie (16) à la section de conduit coudée (22a) et ayant une section transversale circulaire avec un diamètre de conduit (d1) qui est constant et inférieur ou égal à un diamètre de galerie (d2) de l'ouverture inférieure (20) de la galerie (16), la section de conduit coudée (22a) s'étendant de la section de conduit cylindrique droite (22b) le long d'un axe incurvé jusqu'à la sous-partie de cavité latérale (24) et incluant une section transversale circulaire sur toute sa longueur,
**caractérisé en ce que**
la seconde partie de conduit de circulation (P2) a une section transversale circulaire sur toute sa longueur, le diamètre de conduit (d1) de la section de conduit cylindrique droite (22b) est inférieure à un diamètre (d3) de la seconde ouverture (14), et un diamètre de la section transversale de la seconde partie de conduit de circulation (P2) décroit graduellement du diamètre (d3) au niveau de la seconde ouverture (14) au diamètre de conduit (d1) au niveau de la section de conduit cylindrique droit (22b).

2. Le corps de soupape selon la revendication 1, dans lequel la section de conduit cylindrique droite (22b) de la sous-partie de cavité inférieure (22) est centrée sur l'axe de galerie (Ag).

3. Le corps de soupape selon l'une quelconque des revendications précédentes, dans lequel la première ouverture (12) est une entrée du corps de soupape et la seconde ouverture (14) est une sortie de corps de soupape.

4. Le corps de soupape selon l'une quelconque des revendications 1 et 2, dans lequel la seconde ouverture (14) est une entrée du corps de soupape et la première ouverture (12) est une sortie du corps de soupape.

5. Le corps de soupape selon l'une quelconque des revendications précédentes, dans lequel la section de conduit cylindrique droite (22b) a une dimension longitudinale qui est inférieure au diamètre du conduit (d1).

6. Le corps de soupape (10) selon l'une quelconque des revendications précédentes et comprenant :
un premier axe de circulation (A1) s'étendant le long d'un centre de la première partie de conduit de circulation (P1) entre la première ouverture (12) et l'ouverture latérale (18) de la galerie (16) ; et
un second axe de circulation (A2) s'étendant le long d'un centre de seconde partie de conduit de circulation (P2) entre la seconde ouverture (14) et l'ouverture inférieure (20) de la galerie (16), au moins une partie du second axe de circulation (A2) étant alignée avec l'axe de galerie (Ag) à un endroit immédiatement adjacent à l'ouverture inférieure (20) de la galerie (16) ;
dans lequel la section de conduit cylindrique droite (22b) est disposée à un endroit immédiatement adjacent à l'ouverture inférieure (20) de la galerie (16) et centrée le long du second axe de circulation (A2) et de l'axe de galerie (Ag).
